# EUROPEAN PATENT APPLICATION

(11) **EP 3 424 325 A1**
(43) Date of publication of application: **09.01.2019**
(21) Application number: 17179312.8
(22) Date of filing: 03.07.2017
(51) Int. Cl.: A01N 47/20, A23B 7/154, A01N 25/02

(54) **CHLORPROPHAM-CONTAINING COMPOSITION**

(71) Applicant: Certis Europe B.V., 3605 MA Maarssen (NL)
(72) Inventor: The designation of the inventor has not yet been filed
(74) Representative: McNab, Donald C.

(57) **Abstract**

The present invention relates to a solution of the sprout-inhibiting compound chlorpropham, methods of preparing such solutions, uses of and methods using such solutions to reduce sprouting from tubers, particularly in potatoes, to kits from which solutions of the invention may be prepared and to tubers treated with these solutions.

## Description

### FIELD OF THE INVENTION

The present invention relates to a solution of the sprout-inhibiting compound chlorpropham, methods of preparing such solutions, uses of and methods using such solutions to reduce sprouting from tubers, particularly in potatoes, to kits from which solutions of the invention may be applied and to tubers treated with these solutions.

### BACKGROUND OF THE INVENTION

Treatment of tubers, for example potatoes, with chemicals having sprout-inhibiting properties is known. Chlorpropham (CAS No. 101-21-3), also known by its IUPAC name of isopropyl (3-chlorophenyl)carbamate and as CIPC, chlorpropham and chlor-IPC) has been used for this purpose for many years. Recently, other chemicals have been used to the same purpose, such as various isomers of di*i*sopropylnapthalene and other substituted naphthalenes.

The reason for such treatments arises from a propensity of tubers to sprout during the storage to which they are typically subjected after harvesting: potatoes and other tubers are sometimes stored for 6 to 10 months before being used in fresh potato markets or for further processing. Processing may involve, for example, conversion into comestibles products such as chips (French fries) or crisps (chips). Tuber sprouting (sometimes referred to as tuber shooting or germination or dormancy break) is the onset of the germination processes. The so-called sprouts can later grow to form shoots and roots. Since nutrient medium for the sprouts is the tuber itself, sprouting which happens during storage is thus accompanied with a loss of quality, often manifested by undesirable weight loss, shrivelling and irregular sugar contents. Accompanying the development of sprouts, however, is often the generation of toxic glycoalkaloids. Since these are not destroyed during cooking, their presence can render potatoes worthless.

Whilst sprouting can be prevented by maintaining potatoes at a temperature of about 2 °C, storage at this temperature tends to result in the formation of reducing sugars. These cause undesirable sweetness of taste and brown colouring when potatoes are processed by frying process into chips or crisps. For such reasons, potatoes are normally stored at temperatures of between about 2 and about 10 °C, often between about 5 °C and about 9 °C. Potato varieties have different characteristics regarding the minimum temperatures at which reducing sugars are accumulated. Although storage in such temperatures addresses the problem of reducing sugar development, sprouting can occur at such temperatures, after as little as one month's storage, depending on variety, temperature management (fluctuating temperatures break dormancy) and seasonal differences. In view of the extended periods for which potatoes are often stored, they can become entangled in sprouts and commercially unviable, when sprout control products such as chlorpropham are not used.

For this reason, most potatoes stored for the medium and long-term are treated with sprout-inhibitors, often chlorpropham.

Chlorpropham is typically applied to tubers by a process well known in the art as fogging, which denotes the use of special equipment for the production of an aerosol of the product, which is then distributed, typically within large potato storage facilities.

Fogging is often divided into two subtypes: cold fogging and hot fogging. Cold fogging, as the name implies, refers to generation of a fog at lower temperatures than that used to generate the fog in hot fogging, cold fogging typically involving temperatures of between about 0 °C and about 40 °C, generating the spray droplets of the fog without any external heat. Cold fogging can be advantageous for a number of reasons. However, cold fogging usually produces larger droplets, which means that the distribution through the potato store will be sub-optimal. For this reason, hot fogging is the only acceptable method to apply chlorpropham during the storage of potatoes. In conventional thermal fogging, chlorpropham is introduced into a stream of hot air of about 230 °C to about 550 °C, to produce a chlorpropham-containing aerosol. Once the liquid enters the flow of hot air in the exhaust pipe, the liquid breaks up in minute aerosol droplets, preferably in a range of 0.1 - 3 µm VMD. The mass of small droplets will be visible as a smoke (= aerosol or fog). While keeping all openings of the building to the outside closed (and sealed), the resultant fog is circulated through stored potatoes with the use of fans, which are normally used to refresh the air in the potato store. Owing to biodegradation, volatilization and removal by ventilation with outside air of chlorpropham over time, multiple applications can be required to provide effective control over sprouting depending on durations of storage.

Solutions of chlorpropham in dichloromethane have been known for many years and are effective for use in hot fogging. However, environmental pressures continue to mount to replace the dichloromethane solvent with a more environmentally friendly alternative, in particular a solvent absent halogen atoms (i.e. to use a non-halogenated solvent). This is not a straightforward issue, however, since it is important when devising solutions intended for use in hot fogging equipment that the autoignition temperature of the solvent is as high as possible, for safety reasons: to prevent the solution catching fire during the fogging operation. On the other hand, it is also important that solutions, often highly concentrated solutions, are of low viscosity at low temperatures (generally owing to the relatively cool temperatures at which potatoes are stored, and also considering that outdoor conditions (where machinery may be operated) might be very cold during use.

It will be understood that it is advantageous for presentations of chlorpropham to be available in concentrated form, so as to reduce packing and shipping costs. In addition, high concentration of chlorpropham solutions allow shorter application times than products of low concentration.

One commercial formulation found to balance the need in the art to provide solutions of chlorpropham in non-halogenated solvents that are not viscous at low temperatures comprises chlorpropham in the solvent eugenol (2-methoxy-4-(prop-2-en-1-yl)phenol; CAS No. 97-53-0).

However, problems have been found with the physical stability of solutions of chlorpropham in eugenol if concentrated, in particular after storage at low temperature. In particular, products having high concentrations of chlorpropham can show unpredictable crystallisation profiles and, where crystallisation occurs, there can be a large volume of crystalline material deposited, the re-dissolution of which is not straightforward. This is important because of regulatory limits on the amounts of chlorpropham that may be applied to potatoes: if the concentration of a chlorpropham solution is unknown (owing to crystallisation), the solution is generally unusable commercially.

Empty packs with crystals of chloropham in them will have to be considered as chemical waste whereas most pesticide containers when sufficiently emptied can be collected as general waste.

It would be of benefit to the art for there to be an alternative presentation of chlorpropham, suitable for use, preferably commercial use, for example in hot fogging. The present invention addresses this need.

### SUMMARY OF THE INVENTION

We have found that, with the use of particular non-halogenated solvents, it is possible to prepare concentrated solutions of chlorpropham, which have usefully high autoignition temperatures and low viscosities at temperatures at which chlorpropham is generally used (about 0 °C to about 10 °C, for example about 3 °C to about 10 °C), whilst at the same time maintaining solvation of the chlorpropham even at low temperatures (for example at temperatures of as low as -10 °C) to which often concentrated chlorpropham solutions are commonly subjected.

The present invention thus provides alternative formulations, in particular solutions, of chlorpropham, which are suitable for use in hot fogging applications, and particularly but not necessarily for use in sprout prevention in tubers. These offer useful and technically advantageous alternatives to the existing formulations of chlorpropham available hitherto. The invention is thus of clear benefit to the art.

Viewed from a first aspect, therefore, the invention provides a solution comprising chlorpropham and at least one solvent selected from the list consisting of dimethyl-2-methylpentanedioate; ethylene glycol diacetate; methyl-5-(dimethylamino)-2-methyl-5-oxopentanoate; N,N-dimethyldecanamide and di*i*sobutylesters of α,ω-C₄₋₆ dicarboxylic acids.

Viewed from a second aspect, the invention provides a method of forming a solution in accordance with the first aspect of the invention, comprising contacting chlorpropham and at least one solvent selected from the list consisting of dimethyl-2-methylpentanedioate; ethylene glycol diacetate; methyl-5-(dimethylamino)-2-methyl-5-oxopentanoate; N,N-dimethyldecanamide and di*i*sobutylesters of α,ω-C₄₋₆ dicarboxylic acids.

Viewed from a third aspect, the invention provides a method comprising applying a solution in accordance with the first aspect of the invention, or obtainable in accordance with the second aspect of the invention, to a tuber.

Viewed from a fourth aspect, the invention provides the use of a solution in accordance with the first aspect of the invention in reducing sprouting in tubers.

Viewed from a fifth aspect, the invention provides a tuber comprising a solution in accordance with the first aspect of the invention, or obtainable in accordance with the second aspect of the invention, on at least a part of its surface.

Viewed from a sixth aspect, the invention provides a kit of parts comprising, in two or more separate containers, chlorpropham and at least one solvent selected from the list consisting of dimethyl-2-methylpentanedioate; ethylene glycol diacetate; methyl-5-(dimethylamino)-2-methyl-5-oxopentanoate; N,N-dimethyldecanamide and di*i*sobutylesters of α,ω-C₄₋₆ dicarboxylic acids.

Further aspects and embodiments of the present invention will be evident from the discussion that follows below.

### BRIEF DESCRIPTION OF THE FIGURES

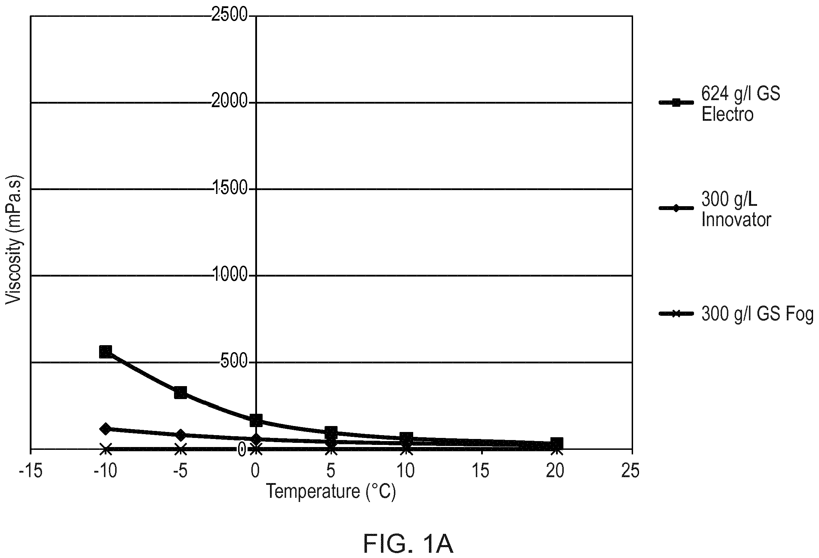

Fig. 1A depicts viscosity profiles of commercially available products Gro-Stop Fog, Gro-Stop Innovator and Gro-Stop Electro (all Certis Europe products).

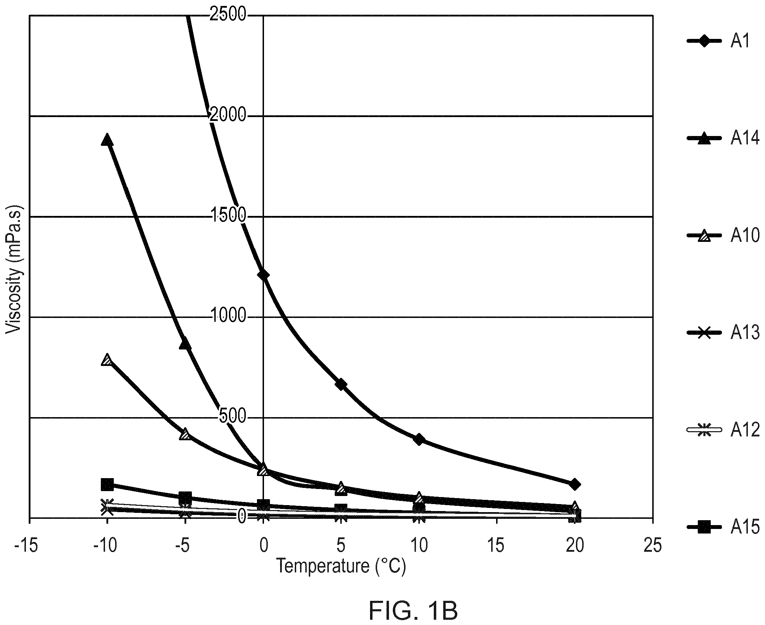

Fig. 1B depicts viscosity profiles of chlorpropham-containing both of and not of the present invention.

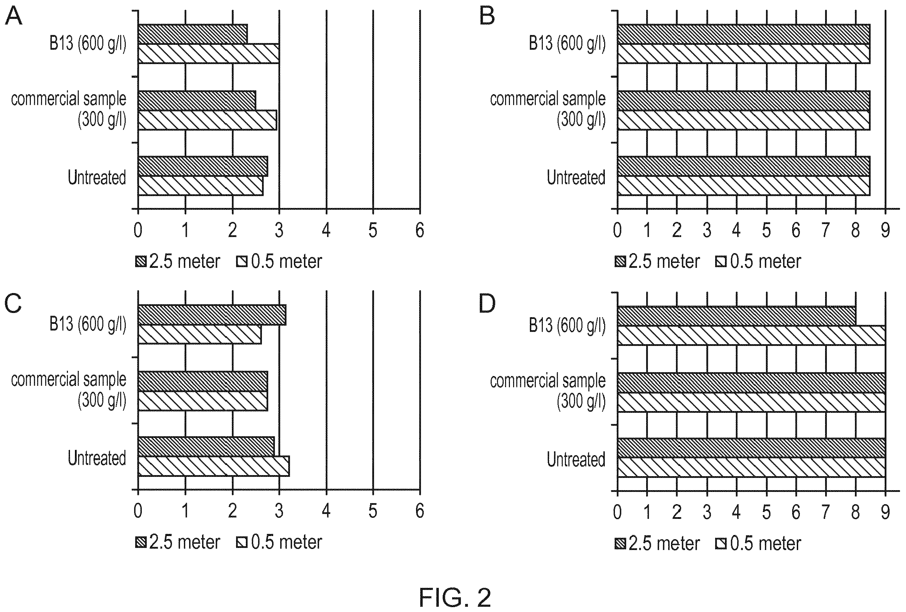

Figs 2A and 2C represent the colour quality of chips (French Fries) and Figs 2B and 2D represent the colour quality of crisps (chips) each made from potatoes taken from a height of 2.5 m or 0.5 m above the floor from bulk piles of potatoes and treated with (i) a chlorpropham solution of the invention (B13) or (ii) a commercially available chlorpropham solution. The treated potatoes used in the generation of the data in Figs 2A and 2B were from a different location to those used for Figs 2C and 2D. Untreated potatoes from the same potato lots treated for the purposes of Figs 2A & 2C and Figs 2B & 2D, were stored at the same time and under the same storage conditions at a chlorpropham-free facility and these potatoes were used as reference samples. Where potatoes were treated with chlorpropham, this involved application of the sequence 12 g + 3 x 8 g (g = grams of CIPC per ton of potatoes). Applications made at 8 week intervals.

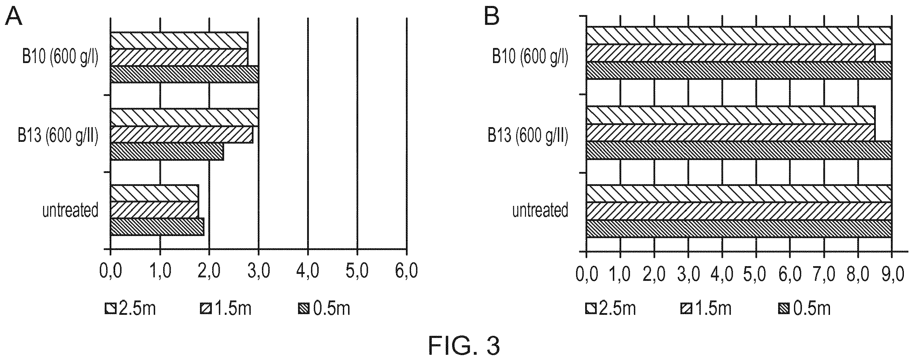

Fig. 3A represents the colour quality of chips (French Fries) and Fig. 3B represents the colour quality of crisps (chips) each made from potatoes either treated with a chlorpropham solution of the invention (B10 or B13) or untreated potatoes. The treated potatoes used in the generation of the data in Figs 3A and 3B were from the same location as those used for Figs 2C and 2D. Untreated potatoes from the same potato lots treated for the purposes of Figs 3A and 3B were stored at the same time and under the same storage conditions at a chlorpropham-free facility and these potatoes were used as a reference sample. Where potatoes were treated with chlorpropham, this involved application of the sequence 12 g + 2 x 6 g (g = grams of CIPC per ton of potatoes).

### DETAILED DESCRIPTION OF THE INVENTION

Any discussion of documents, acts, materials, devices, articles or the like included in the present specification is not to be taken as an admission that any or all of these matters form part of the prior art or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

As used in this specification, the singular forms "a", "an", and "the" include plural referents unless the context expressly indicates to the contrary. Thus, for example, reference to a di*i*sobutylester of a α,ω-C₄₋₆dicarboxylic acid includes a single type of such a diester as well as two or more such diesters.

The term "about" herein, particularly with reference to a given quantity, is meant to encompass deviations of plus or minus five percent.

The invention arises from the finding that certain solvents are suitable for use in providing chlorpropham-containing solutions, particularly for use in hot fogging.

According to particular embodiments of the invention, the solvent is dimethyl-2-methylpentanedioate (CAS No. 1435-94-0), also known as 1,5-dimethyl-2-methylpentanedioate dimethyl 2-methylglutarate and 2-methylpentanedioic acid, dimethyl ester. This eco-friendly solvent is available commercially available from Solvay as Rhodiasolv^{®} IRIS. It is a colourless liquid at room temperature and has a flash point of 98 °C and an autoignition temperature of 430 °C.

As is demonstrated in the appended experimental section, chlorpropham solutions prepared with the solvent have good physical stability, including against crystallisation at low temperatures, and acceptable viscosities at low temperature. Notably, a 48.7% w/w solution of chlorpropham in dimethyl-2-methylpentanedioate, even when seeded with chlorpropham crystals and stored at temperatures as low as -10 °C, did not lead to crystal growth; in fact, at temperatures of -5 °C and above, the seed crystals dissolved. Such solutions also have acceptable viscosities temperatures which chlorpropham will typically be used: in the range of about 0 °C to about 10 °C.

According to still other particular embodiments of the invention, the solvent is a di*i*sobutylester of a α,ω-C₄₋₆dicarboxylic acid, i.e. is di*i*sobutyl succinate (CAS No. 925-06-4), di*i*sobutyl glutarate (CAS No. 71195-64-7) or di*i*sobutyl adipate (CAS No. 141-04-8). According to particular embodiments, the solvent is a mixture of one or more of these di*i*sobutylesters.

According to still more particular embodiments, the solvent is a mixture of all three of these di*i*sobutylesters, for example wherein the w/w contents of the di*i*sobutyl succinate, di*i*sobutyl glutarate and di*i*sobutyl adipate are 10-30, 50-70 and 5-30 respectively, more commonly 15-25, 55-65 and 10-25 respectively. Such mixtures are available commercially, these often being referred to simply as "diisobutyl ester". For example, diisobutyl ester available from Solvay as Rhodiasolv^{®} DIB comprises 15-25% w/w di*i*sobutyl succinate, 55-65% w/w diisobutyl glutarate and 10-25% w/w di*i*sobutyl adipate, with the product data sheet for this product referring to a colourless liquid having a flash point of 134 °C; and Coasol^{®} available from Chemoxy as indicated to comprise 15-30% w/w di*i*sobutyl succinate, 55-70% w/w di*i*sobutyl glutarate and 8-25% w/w di*i*sobutyl adipate, with the product data sheet for this product referring to a colourless liquid having a flash point of 131 °C.

As is demonstrated in the appended experimental section, chlorpropham solutions prepared with Rhodiasolv^{®} DIB have good physical stability, including against crystallisation at low temperatures, and acceptable viscosities at low temperature.

According to other particular embodiments of the invention, the solvent is ethylene glycol diacetate (CAS No. 111-55-7), also known as 1,2-ethanediol diacetate. It is commercially available as Eastman™ Ethylene Glycol Diacetate (EGDA) and is a colorless, low odor, very slow-evaporating solvent with a minimum 98% EGDA and has a flash point of 88 °C.

Chlorpropham solutions prepared with Eastman EGDA have good physical stability, including against crystallisation at low temperatures, and acceptable viscosities at low temperature (See appended experimental section).

According to other particular embodiments of the invention, the solvent is N,N-dimethyldecanamide (CAS No. 14433-76-2), also known as N,N-dimethylcapramide, N,N-dimethyldecan-1-amide and C10 Amide. It is available commercially available from Stephan Company as HALLCOMID™ M-10. It is a colourless liquid at room temperature and has a flash point of 120 °C and an autoignition temperature of 330 °C.

As is demonstrated in the appended experimental section, chlorpropham solutions prepared with this solvent have good physical stability, including against crystallisation at low temperatures, and acceptable viscosities at low temperature. Notably, solutions of chlorpropham of concentrations of 55.8% w/w in N,N-dimethyldecanamide, even when seeded with chlorpropham crystals and stored at temperatures as low as -10 °C, did not lead to crystal growth; in fact, at all these temperatures, the seed crystals dissolved. Such solutions also have acceptable viscosities temperatures which chlorpropham will typically be used: in the range of about 0 °C to about 10 °C.

According to other particular embodiments of the invention, the solvent is methyl-5-(dimethylamino)-2-methyl-5-oxopentanoate (CAS No. 1174627-68-9), also known as pentanoic acid, 5-(dimethylamino)-2-methyl-5-oxo-methyl ester. It is available commercially available from Solvay as Rhodiasolv^{®} POLARCLEAN. It is typically a clear yellow liquid at room temperature and has a flash point of 144-146 °C and an autoignition temperature of 390 °C.

As is demonstrated in the appended experimental section, chlorpropham solutions prepared with this solvent have good physical stability, including against crystallisation at low temperatures, and acceptable viscosities at low temperature. Notably, a 59.5% w/w solution of chlorpropham in methyl-5-(dimethylamino)-2-methyl-5-oxopentanoate, even when seeded with chlorpropham crystals and stored at temperatures as low as -10 °C, did not lead to crystal growth; in fact, at all these temperatures, the seed crystals dissolved.

It will be understood that, when preparing solutions of the invention, one or more solvents may be used. Given the commercial availability of mixtures of di*i*sobutylesters of a α,ω-C₄₋₆dicarboxylic acids, it will further be understood that solutions of the invention may comprise such a mixture of of di*i*sobutylesters of a α,ω-C₄₋₆dicarboxylic acids and one or more solvents selected from the list consisting of dimethyl-2-methylpentanedioate; ethylene glycol diacetate; pentanoic acid, 5-(dimethylamino)-2-methyl-5-oxo-methyl ester; and N,N-dimethyldecanamide

According to particular embodiments of the invention, the solution comprises dimethyl-2-methylpentanedioate or a di*i*sobutylester of a α,ω-C₄₋₆dicarboxylic acid (including the mixtures of one or more of these di*i*sobutylesters discussed above, including disobutyl ester).

According to particular embodiments of the invention, the solution comprises dimethyl-2-methylpentanedioate.

According to some embodiments of the invention, the solution of the invention, according to all aspects of the invention, consists of chlorpropham and at least one solvent selected from the list consisting of dimethyl-2-methylpentanedioate; methyl-5-(dimethylamino)-2-methyl-5-oxopentanoate; ethylene glycol diacetate; N,N-dimethyldecanamide and di*i*sobutylesters of α,ω-C₄₋₆ dicarboxylic acids.

According to particular embodiments of the invention, the solution of the invention, according to all its aspects, consists of chlorpropham and dimethyl-2-methylpentanedioate or a di*i*sobutylester of a α,ω-C₄₋₆dicarboxylic acid (including the mixtures of one or more of these di*i*sobutylesters discussed above, including disobutyl ester).

According to particular embodiments of the invention, the solution of the invention, according to all its aspects, consists of chlorpropham and dimethyl-2-methylpentanedioate.

According to other embodiments, the solution of the invention, according to all aspects of the invention, consists essentially of chlorpropham and at least one solvent selected from the list consisting of dimethyl-2-methylpentanedioate; methyl-5-(dimethylamino)-2-methyl-5-oxopentanoate; ethylene glycol diacetate; N,N-dimethyldecanamide and di*i*sobutylesters of α,ω-C₄₋₆ dicarboxylic acids. By "consists essentially" is meant that the solutions of the invention may comprise small quantities of one or more additional components (for example antioxidants or surfactants). Where present, the total amount of such additional components will typically be between about 0.1 and about 10% w/w, with respect to the weight of the solution, often present in total amounts of less than about 5% by weight, for example less than about 3% by weight.

The solutions of the invention are generally non-aqueous, i.e. essentially free of water. Essentially free of water denotes herein a concentration of water of less than about 2.0% w/w (with respect to the weight of the solution), more typically less than about 1.0%w/w, still more typically less than about 0.5% w/w. Desirably, the concentration of water in the non-aqueous solution is as little as practicable, for example less than about 0.2% w/w, less than about 0.1 % w/w or less than about 0.02% w/w. Water concentration may be measured by volumetric Karl Fischer titration, in accordance with ASTM E203-16.

As will already be understood from the discussion above, the solvents present in the solutions of the invention are each commercially available or can be prepared by a skilled person from readily available chemicals without undue burden. A single solvent can be, and typically is, used in solutions of the invention or mixtures of solvents can be used. It will be understood however that, where the invention makes use of a di*i*sobutylester of a α,ω-C₄₋₆ dicarboxylic acid, mixtures of such di*i*sobutylesters will generally be used.

By solutions herein is meant solutions at standard atmospheric pressure and at 20 °C (20 °C sometimes being referred to herein as room temperature). These may be prepared by combining predetermined quantities of a desired solvent and chlorpropham (for example in accordance with the second aspect of the invention) to form a slurry, suspension or other mixture in which the chlorpropham is not fully dissolved in the solvent. The undissolved chlorpropham can be dissolved either immediately after contacting of the chlorpropham and the solvent, or (less typically) be dissolved at a later time, for example immediately prior to the use of the desired chlorpropham solution.

Dissolution may be achieved, for example, heating and/or agitation, and/or with use of other methods at the ready disposal of the skilled person. Heating may for example involve the use of hot air, heating baths, microwave heating or other suitable heating methods, or a combination of these or other methods. Agitation may involve complete or partial homogenisation, application of ultrasound to mixtures of solvent and chlorpropham, stirring, shaking or other suitable methods of agitation.

According to particular embodiments of the invention, solutions of the present invention typically comprise between about 450 and about 700 g/L of chlorpropham, for example either between about 500 and about 575 g/L or between about 550 g/L and about 675 g/L. These concentrations are each on the basis of solutions at room temperature and atmospheric pressure.

As is set out in the experimental section below, solutions of chlorpropham having concentrations between 500 and 700 g/L are shown to be stable when stored at ambient temperature, as well as being stable at much lower temperatures. In addition, each of these solvents allows dissolution of a much greater quantity of chlorpropham than the maximum concentration that may be dissolved in dichloromethane (300 g/L).

Although use of solvents in accordance with the present invention allows provision of stable solutions, it may on occasion be convenient to, for example, prepare such solutions *in situ.* This may be achieved by use of the kits in accordance with the sixth aspect of the invention.

Although it is not an essential feature of the invention, it is anticipated that the primary commercial use of the solutions of the invention are in the treatment of tubers to reduce sprouting, for example in accordance with the third and fourth aspects of the invention.

By tuber is meant herein an often edible, greatly thickened underground part of some plants' (i) rhizomes or stolons, which bear buds from which new plants develop; or (ii) roots. The former are generally referred to as stem tubers and include all types of potatoes. The latter are generally referred to as root tubers. Tubers generally serve to store nutrients for the plant to survive the winter or dry months. They provide energy and nutrients for regrowth and for asexual reproduction.

Examples of tubers and crops are those found in potatoes (*Solanum tuberosum*)*,* sweet potatoes (*Ipomoea batatas*)*,* cassava (*Manihot esculenta*) and yam (*Dioscorea*)*.* The present invention is discussed herein with reference to potatoes, these tubers being the most important commercial application of chlorpropham, both generally and in accordance with the present invention. However, the invention is not to be considered to be limited in this respect: it is to be understood that the discussion herein and exemplification of the invention herein, with respect to potatoes, applies *mutatis mutandis* to other tubers.

As used herein, the term "tuber" is therefore inclusive of "potato tuber." "Potato tuber" refers to the underground storage organ of the potato plant (*Solanum tuberosum*)*.* The potato tuber is a modified stem and includes buds that can sprout and form new potato plants. The term "(potato) tubers" refers to both tubers generally and to potato tubers of various varieties.

As used herein, the terms "sprout", "shoot" and "germ" are considered to be synonyms and thus interchangeable. The terms refer to the very early growth of a plant from a tuber.

The present invention relates to advantageous solutions of chlorpropham and applications of these based on chlorpropham's sprout-inhibiting properties. The solutions of the invention may be administered in combination or as a sequence with one or more additional sprout inhibitors, for example maleic hydrazide (Field application), or in store applied dimethyl naphthalene, diisopropylnaphthalene and 3-decen-2-one.

The application of the solutions of the invention to tubers is within the scope of the present invention, as are tubers having one or more solutions of the invention adhered to at least part of their surface.

Typically the method in accordance with the third aspect of the invention and use in accordance with the fourth aspect of the invention will comprise fogging a solution in accordance with the first aspect of the invention, or obtainable in accordance with the second aspect of the invention, to create a fog and applying the fog to a tuber. Typically the fogging will be hot fogging.

The term "fogging" as used herein refers to the process to produce an aerosol of the product which contains an active ingredient (here chlorpropham). Since the aerosol with product and active ingredient is visible as a white cloud, it is usually called fogging. Fogging is generally carried out by a fogging machine or fog-air sprayer. This type of equipment is well known to those of normal skill in the art. Fogging machines typically comprise a fuel tank, formulation tank, pump, fogging nozzle, heating element or jet engine, fogging pipe and controls.

The solutions of the present invention are typically applied to tubers to be stored using hot fogging (also known in the art as thermal fogging or thermonebulization) techniques, which are well-known to the skilled person. Typically, the solution is made into an aerosol by hot air or any other gas (e.g. exhaust from fuel engine) which breaks up the slow flow of liquid through a nozzle into the fogging pipe. The temperature at which fogging is performed, i.e. the hot air or hot plate into or onto which the solutions of the present invention are contacted, typically as solutions, is generally between 150 °C and 350 °C, more preferably between 175 °C and 300 °C.

Appropriate apparatus for performing hot fogging is well known to those skilled in the art. One example is a pulse jet engine. This comprises a bottle-shaped combustion chamber (not dissimilar to that found in a rocket engine), which opens into a long exhaust pipe (known as a resonator). A mixture of fuel and air is supplied through non-return valves into a combustion chamber, and is ignited, generally by a high-tension spark obtained from a battery powered electronic ignition device connected to the plug for a few seconds. Once the machine has started, the high-tension spark is no longer required and is automatically deactivated. The exhaust fumes from the combustion chamber escape as a pressure wave at high velocity through a long pipe of smaller diameter than the combustion chamber, and draw in a fresh change of fuel and air from the carburettor. In operation, there may be about 80 - 100 pulsations per second. By means of a non-return valve a tank comprising the product including the active ingredient is also pressurised. Once the machine has warmed up, a valve tap is opened to permit the controlled and regulated flow of solution through interchangeable dosage nozzles, fitted into the end of the resonator. The chemical to be atomised is injected into the hot exhaust gas stream, which breaks up the liquid in miniscule droplets (the aerosol or fog).

It will be understood by those skilled in the art that the immediately hereinbefore described method of hot fogging is merely illustrative. Other methods may be practised and or other machines used other than pulse jet engines.

After generation of the fog, it is circulated, generally with the use of fans, amongst tubers (typically potatoes in accordance with the present invention) being stored.

The phrase "reducing sprouting" denotes that fewer and/or less weight of buds, sprouts or stems (referred to collectively herein as sprouts) grow from a defined number of tubers contacted with a solution of the invention than a corresponding number of control tubers of the same tuber cultivar not so contacted; and/or that the average rate of growth of sprouts growing from a defined number of tubers contacted with a solution of the invention is less than that of a corresponding number of control tubers of the same cultivar not so contacted; and/or the removal of sprouts that may already have formed. It is therefore to be understood that reducing sprouting includes within its scope the prevention of sprouting. Accordingly, according to particular embodiments of the method of the third aspect of the invention and use of the fourth aspect of the invention, sprouting is prevented.

Generally, a single solution of the invention can be applied to tubers in accordance with the various aspects of the invention.

The solutions of the invention may be applied, after harvest but prior to storage and/or during storage and/or during transportation (for example in trucks or trains), generally after having been stored.

Harvesting potatoes often causes bruising, cuts or other abrasions. Such damage tends to cause damage during subsequent storage and transportation. A natural process, known as suberization, tends to ameliorate such damage. However, whenever potatoes are stored, slow suberization can result in, a significant loss of potatoes through spoilage. Early treatment with sprout inhibitors - including chlorpropham - may retard suberization, thus contributing to the loss of potatoes through spoilage. Accordingly, although early treatment with chlorpropham can be advantageous for the purpose of inhibiting sprouting, application of chlorpropham is often delayed until after suberization, because application of chlorpropham for the purpose of sprout-inhibition tends to retard suberization, thereby resulting in accelerated rot and spoilage.

According to some embodiments, methods of the invention may be used to reduce new sprouting during shipping and distribution of tubers, thereby maintaining quality by reducing shrinkage that can occur upon sprouting.

Often, the solutions of the invention are applied post-harvest, optionally prior to the onset of sprouting. Put another way, the methods of the invention are according to some embodiments not used to burn back/off existing sprouts but practised before the end of the natural dormancy period of the harvested tubers, particularly potato tubers, i.e., before the buds on the potato tubers have begun to sprout. According to such embodiments, a solution of the invention is applied to the tubers within six months, often within four months, for example one month or less, e.g. one or two weeks, after harvest. Typically, a solution of the invention is applied within 3 weeks after harvesting the potatoes for optimum efficacy.

The duration of the natural dormancy period is known to those of skill in the art and varies between tubers, and indeed between potato cultivars, depending on factors including tuber physiology and tuber condition at harvest, and the storage temperature. For example, a natural dormancy period may be about 10 to 20 weeks if potatoes are stored at temperatures of about 7 to about 9 °C depending on temperature fluctuations and potato cultivar estimates (in days) of the natural dormancy period falls between about 70-140 days .

Potatoes are sometimes subject to warming-up treatment (generally known as reconditioning) intended to instigate chemical processes in tubers, which serve to metabolize reducing sugars that may have generated (for example if tubers have been stored at too low temperatures). Such treatment is generally referred to in the art as reconditioning, and typically involves storage at higher temperatures than those at which the potatoes may have been stored previously, for example between 14 and 16 °C. Reconditioning may last between about 2 and about 4 weeks, often immediately before potatoes are sent to market.

Solutions of the invention may be advantageously applied at the outset of reconditioning (because, with the elevated temperature typical of reconditioning, sprouting will occur). Thus, in some embodiments of the invention, solutions are applied one, two, three, four or five weeks before potato tubers are processed, for example when they are used to make comestibles products such as crisps or chips.

It will be understood that solutions of the invention may be applied to tubers more than once. If this is the case, different solutions of the invention may be used on these different occasions.

An example of the practice of a method of the invention is the application, typically by hot fogging, of a solution of the invention to numerous, harvested, potato tubers stored in bulk storage sheds. Such facilities often contain very significant quantities of potatoes, for example between 500 and 25000 tons. The facilities are bespoke, designed to allow ventilation through piles of potatoes (which piles may be up to 6 m in height), as well as allowing temperature and relative humidity to be controlled. Temperature control is generally achieved by a combination of ventilation, which can also be used to adjust relative humidity to a desired level.

When applying the solutions of the invention, for example by hot fogging, the chlorpropham-containing fog may be introduced into the storage ventilation system that circulates air through the potato pile, e.g. from bottom to top. After fogging, the storage sheds are generally kept closed, and the air will re-circulated within the store for several hours. It will be understood that such general methods of application, and temperature and humidity control, may also be practised in environments other than potato storage sheds, for example during transport of potatoes (either to or from the storage sheds) and/or on sorting and packing lines.

Solutions of the invention can if desired be atomised or vaporised with various types of nozzles (for example air-assisted or ultrasonic nozzles).

The methods of the present invention are applicable to any tuber but are of greatest application commercially in the treatment of all potato varieties.

Any patent and non-patent reference referred to herein is hereby incorporated by reference in its entirety, as if the entire contents of each reference were set forth herein in its entirety.

The methods of the present innovation are applicable to any tuber but are of greatest application commercially in the treatment of all potato varieties. According to some embodiments, potato tubers may be from a variety with short dormancy period such as Lady Christl, but also other potato tuber varieties such as Innovator, Lady Claire and Folva.

The invention may be further understood with reference to the following non-non-limiting clauses:
1. A solution comprising chlorpropham and at least one solvent selected from the list consisting of dimethyl-2-methylpentanedioate; methyl-5-(dimethylamino)-2-methyl-5-oxopentanoate; ethylene glycol diacetate; N,N-dimethyldecanamide and di*i*sobutylesters of α,ω-C₄₋₆ dicarboxylic acids.
2. The solution of clause 1, which consists essentially of the chlorpropham and the at least one solvent and a total amount of between about 0.1 and about 10% w/w, for example between about 0.1 and about 5% w/w with respect to the weight of the solution, of one or more additional components.
3. The solution of clause 2, wherein the one or more additional components are selected from the group consisting of antioxidants and surfactants.
4. The solution of any one of clauses 1 to 3, wherein the solution comprises a concentration of less than about 2.0% w/w water, with respect to the weight of the solution.
5. The solution of any one preceding clause, which comprises dimethyl-2-methylpentanedioate.
6. The solution of any one preceding clause, which comprises methyl-5-(dimethylamino)-2-methyl-5-oxopentanoate.
7. The solution of any one preceding clause, which comprises N,N-dimethyldecanamide.
8. The solution of any one preceding clause, which comprises a di*i*sobutylester of an α,ω-C₄₋₆ dicarboxylic acid.
9. The solution of any one preceding clause, which comprises ethylene glycol diacetate.
10. The solution of clause 8, which comprises a mixture of one or more di*i*sobutylesters of α,ω-C₄₋₆ dicarboxylic acids.
11. The solution of clause 10, which comprises a mixture of diisobutyl succinate, diisobutyl glutarate and diisobutyl adipate.
12. The solution of clause 11, wherein the diisobutyl succinate, diisobutyl glutarate and diisobutyl adipate are of relative weight ratios of 10-30: 50-70: 5-30 respectively, for example 15-25: 55-65: 10-25 respectively.
13. The solution of any one preceding clause, which comprises between about 450 and 650 g/L of chlorpropham, on the basis of the solution at 20 °C and atmospheric pressure.
14. The solution of clause 13, which comprises between about 550 and about 600 g/L of chlorpropham, on the basis of the solution at 20 °C and atmospheric pressure.
15. A method of forming a solution as defined in any one preceding clause, comprising contacting chlorpropham and the solvent.
16. A method comprising applying a solution as defined in any one of clauses 1 to 14 or obtainable or obtained in accordance with clause 15, to a tuber.
17. The method of clause 16 wherein the tuber is a potato.
18. The method of clause 16 or clause 17 comprising fogging the solution to create a fog and applying the fog to the tuber.
19. The method of clause 18 wherein the fogging is hot fogging.
20. The method of any one of clauses 16 to 19 whereby sprouting from the tuber is reduced.
21. The method of any one of clauses 16 to 20 whereby sprouting from the tuber is prevented.
22. The method of any one of clauses 16 to 21 whereby sprouts on the tuber are burnt back.
23. Use of a solution as defined in any one of clauses 1 to 14 or obtainable or obtained in accordance with clause 15, in reducing sprouting in tubers.
24. The use of clause 23, which comprises a method as defined in any one of clauses 16 to 22.
25. A tuber comprising a solution as defined in any one of clauses 1 to 14 or obtainable or obtained in accordance with clause 15, on at least a part of its surface.
26. The tuber of clause 25 which is a potato.
27. A kit of parts comprising, in two or more separate containers, chlorpropham and at least one solvent selected from the list consisting of dimethyl-2-methylpentanedioate; ethylene glycol diacetate; methyl-5-(dimethylamino)-2-methyl-5-oxopentanoate; N,N-dimethyldecanamide and di*i*sobutylesters of α,ω-C₄₋₆ dicarboxylic acids.
28. The kit of clause 27, wherein the at least one solvent is as defined in any one of clauses 5 to 12.

The non-limiting examples below more fully illustrate certain embodiments of this invention.

### EXPERIMENTAL

Chlorpropham solutions comprising various solvent candidates were prepared according to the following method: a given weight of solvent and molten CIPC (at 70 °C) was added to a 50 ml glass winchester. This was put on a roller for 30 minutes, then placed in a 50 °C incubator for 24 hours. Subsequently, the candidate chlorproham solutions were evaluated with respect to appearance after 5 and 24 hours.

To determine whether the chlorpropham solutions were either dissolution or superseded, additional tests were carried out at temperatures of 0 °C and -5 °C. Additionally, two chlorpropham seed crystals with a size of 1 to 2 mm were added to the set of samples and subsequently the samples were stored for 72 hours and then evaluated with respect to crystal growth and change in appearance (Tables 1 and 2). As a reference, samples without seed crystals were studied during this test as well.

Viscosities of the chlorpropham solutions were measured using a Brookfield LV viscometer with spindle no. 2 at 10 rpm as a function of temperature. The densities of the samples were measured using a Pyknometer.

Chlorpropham solutions showing no crystallization growth at -5 °C were studied in more detail. These CIPC samples (see Table 3) were prepared as described before and prior storage seeded with two chlorpropham crystals. The various chlorpropham solutions were subsequently stored at different temperatures: 4 weeks -10 °C, 2 weeks at 54 °C and 8 weeks at 40 °C. Additionally, one set of samples was stored 4 weeks in a cycle chamber, which was set to run a daily program from -10 °C to +10 °C.

Chlorpropham solution B13 was tested in storage season October 2014 - June 2015 in two different test locations (EE and WM) at the same time in comparison to a commercial sample (Gro-Stop Fog, Certis Europe). For that purpose, small lots of different varieties of potatoes were stored in a potato storage compartment (EE 21 m³, WM 31m³) in a pile of bulk potatoes (EE 13 ton, WM 22 ton) at various depths (0.5, 1.0 and 2.5 m above the floor surface (grid or slatted floor). The different varieties of potatoes were each packed in a netted bag to separate them from the bulk potatoes. Per depth and per variety of potatoes, 4 nets with potatoes were placed. Weight of 1 bag was around 6 kg. Additionally, the whole pile of potatoes was treated with B13 using a Swingfog according to a treatment sequence of 12-8-8-8 gram chlorpropham per ton of potatoes with an interval of 8 weeks between each treatment. The treatments started 2 to 3 weeks after loading of the potatoes and the unloading was 7 weeks after the last treatment (EE) and 6 weeks after treatment (WM). Temperature in the stores during the whole storage period was 9 °C and was controlled with ambient air and, every 24 hours, fresh outside air was drawn into the store during 2 minutes to refresh the air to remove CO₂. At the same time and under the same conditions a similar test was conducted with the commercial product Gro-Stop Fog, but using a different storage compartment. Untreated potatoes from the same potato lots were stored at the same time and under the same storage conditions at a chlorpropham-free facility and these potatoes were used as a reference sample.

After completion of the test, the potatoes were evaluated on sprouting reduction efficiency. Additionally, processed potatoes (chips and French fries) were evaluated with respect to colour. The colour score for chips (variety Lady Claire) ranged from 0 (black) to 9 (very light), with a threshold value of 7. A colour score of < 6.5 for chips was rated as unacceptable. For French fries the colour score was rated from 0 (very light) to 6 (black), with a threshold score of 3.0 - 3.5. A colour score of > 4 for French fries was rated as unacceptable.

In a similar pilot test in storage season September 2013 - May 2014, 3 varieties of potatoes were treated with B13 at test location EE using a treatment sequence of 12-6-6 gram chlorpropham per ton of potatoes, with the second treatment 16 weeks after the first treatment followed by a last treatment 8 weeks later. The treatments started 2 to 3 weeks after loading of the potatoes in the storage compartment and the unloading was 4 weeks after the last treatment. Temperature was controlled with ambient air and maintained at 7 °C and every 24 hours, the air was refreshed for 2 minutes to remove CO₂. At the same time and under the same conditions a similar test was conducted with B10, but using a different storage compartment. Untreated potatoes from the same potato lots were stored at the same time and under the same storage conditions at a chlorpropham-free facility and these potatoes were used as a reference sample. After completion of the storage and CIPC-treatment test, the potatoes were evaluated in the same way as that described above.

### RESULTS

It was found that chlorpropham blended fully in all solvents tested and remained in solution when the liquid was cooled to room temperature. However, chlorpropham melts at 41 °C, so 'dissolution at 50 °C' is better described as 'miscibility of two liquids at 50 °C'. Thermodynamically, this is not the same as the dissolution of solid CIPC. The fact that all mixtures remained clear after cooling to ambient (20 °C) was either an indication of complete dissolution or supersaturation. These two states can only be distinguished by 'seeding' the liquids with a crystal of chlorpropham.

Addition of chlorpropham seed crystals induced crystal growth in solutions A7 and A16 within 72 hours of storage at 5 °C. Additionally, solutions A2, A3, A4, A5, A6 and A11 revealed crystal growth after 72 hours of storage at 0 °C (Tables 1 and 2).

Chlorpropham solution A12, gave complete dissolution of chlorpropham down to 0 °C, but at -5 °C the seed crystals remained present in the solvent without further crystal growth within the 72 hours of storage. Advantageously, solutions A1, A10, A13, A14 and A15 gave within 72 hours complete dissolution of CIPC temperatures down to -5 °C.

Viscosity data revealed that the viscosities of solutions A10, A13 and A15 were lower than samples A1 and A14 at temperatures of -5 and -10 °C (see Table 2). Even more advantageously, solutions A12, A13 and A15 showed viscosity profiles very similar to those of existing commercial products (Gro-Stop FOG, Gro-Stop Innovator and Gro-Stop Electro, Certis Europe) and are due to this thus considered as most suitable for outdoor operation at low temperature (see Fig. 1A and Fig. 1B).

Surprisingly, prolonged storage tests of samples seeded with chlorpropham seed crystals for 4 weeks at -10 °C revealed no issues, with the exception of B10, which gave some crystallisation after 4 weeks of storage at -10 °C (Table 3). However, the crystals completely dissolved after heating up the sample to room temperature.

None of the solutions B10, B13 and B15 revealed any product loss in pack weight after completion of 8 weeks and the change in chlorpropham content remained within the limits of experimental error for all samples stored at any temperature during the storage stability study.

Potatoes treated with either B13 or the commercial product revealed less sprouting after treatment with 12 g CIPC per ton followed by 3 x 8 g CIPC treatments than the untreated potatoes in storage season 2014-2015 (EE and WM). Advantageously, B13 showed a low level of sprouting directly after the storage period (approx. 28-34 g/kg for Lady Claire, 32-35 g/kg for Innovator and 15-34 g/kg for Lady Christl) in comparison to untreated (approx. 45-69 g/kg for Lady Claire, 175-188 g/kg for Innovator and 210-270 g/kg for Lady Christl), but a slightly higher level as compared to the commercial product (approx. 12-35 g/kg for Lady Claire, approx. 13-46 g/kg Innovator and approx. 5-37 g/kg for Lady Christl). More advantageously, the fry quality of the French fries (Innovator) and Chips (Lady Claire) treated with either B13 (scores 2.5-3.0) or the commercial product (scores 2.3-3.0) were not affected in comparison to untreated (score 2.7-3.2; Figs 2A and 2C and Fig 2B and 2D).

Similar tests results were obtained during a second pilot test in storage season 2013-2014 in the storage facility EE. During this test, 3 varieties of potatoes were treated with 12 g CIPC per ton followed by 2 x 6 g CIPC treatments using either B10 or B13. Advantageously, B13 showed a lower level of sprouting directly after the storage period (approx. 23 g/kg for Lady Claire, 19 g/kg for Innovator and 5 g/kg for Folva) compared to untreated (approx. 30 g/kg for Lady Claire, 83 g/kg for Innovator and 131 g/kg for Folva). More advantageously, B10 gave a slightly but not significant lower sprouting compared to B13 (approx. 20 g/kg for Lady Claire, 14 g/kg Innovator and 5 g/kg for Folva). After completion of the storage period and further processing of the potatoes, both the fry quality of French Fries (Innovator) and Chips (Lady Claire) of either B10 and B13 treated potatoes were found similar to the untreated potatoes and of good quality (Fig. 3A and 3B).

**Table 1A: Crystallisation tests at various temperatures with chlorpropham solutions**

| | **A1** | **A2** | **A3** | **A4** | **A5** | **A6** | **A7** | **Brand or supplier** |
|---|---|---|---|---|---|---|---|---|
| CIPC | 55 | 55 | 55 | 55 | 55 | 55 | 55 | Certis Europe |
| Propylene carbonate | 45 | | | | | | | Jeffsol AG-1555 |
| Triethylcitrate | | 45 | | | | | | Sigma-Aldrich |
| Isopropyl myristate | | | 45 | | | | | Stepan IPM |
| Methoxyphenyl propene | | | | 45 | | | | Methyl Eugenol (Sigma Aldrich) |
| Glycerol triacetate | | | | | 45 | | | Triacetin |
| Ethvlhexvl lactate | | | | | | 45 | | Puraslov EHL |
| Soybean methyl ester | | | | | | | 45 | Steposol ME |
| **SUM (% w/w)** | **100** | **100** | **100** | **100** | **100** | **100** | **100** | |
| 72 h at 20 °C | cfd | cfd | cfd | cfd | cfd | cfd | cfd | |
| 72 h at 5 °C | cfd | cfd | cfd | cfd | cfd | cfd | g | |
| 72 h at 0°C | cfd | g | g | g | g | g | g | |
| 72 h at -5 °C | cfd | g | g | g | g | g | g | |

| | | | | | | | | |
|---|---|---|---|---|---|---|---|---|
| cfd: clear & fully dissolved snd: seed crystal not dissolved g: crystal growth x: not tested | | | | | | | | |

**Table 1B: Crystallisation tests at various temperatures with chlorpropham solutions**

| | **A10** | **A11** | **A12** | **A13** | **A14** | **A15** | **A16** | **Brand or supplier** |
|---|---|---|---|---|---|---|---|---|
| CIPC | 55 | 55 | 55 | 54 | 54 | 54 | 54 | Certis Europe |
| Dimethyldecanamide | 45 | | | | | | | Hallcomid M-10 |
| Benzyl benzoate | | 45 | | | | | | Sigma Aldrich |
| Ethylene glycol diacetate | | | 45 | | | | | Eastman EDGA |
| Dimethyl 2-methylpentanedioate | | | | 46 | | | | Rhodiasolv IRIS |
| Pentanoic acid, 5-(dimethylamino)-2-methyl-5-oxo-methyl ester | | | | | 46 | | | Rhodiasolv Polar Clean |
| Diisobutyl Ester of short chain diacids | | | | | | 46 | | Rhodiasolv DIB |
| 2,2,4-trimethyl-1,3-pentanediol monoisobutvrate | | | | | | | 46 | Texanol |
| **SUM (% w/w)** | **100** | **100** | **100** | **100** | **100** | **100** | **100** | |
| 72 h at 20 °C | cfd | cfd | cfd | cfd | cfd | cfd | cfd | |
| 72 h at 5 °C | cfd | cfd | cfd | cfd | cfd | cfd | g | |
| 72 h at 0 °C | cfd | g | cfd | cfd | cfd | cfd | x | |
| 72 h at -5 °C | cfd | g | snd | cfd | cfd | cfd | x | |

| | | | | | | | | |
|---|---|---|---|---|---|---|---|---|
| cfd: clear & fully dissolved snd: seed crystal not dissolved g: crystal growth x: not tested | | | | | | | | |

**Table 2: Viscosity of several chlorpropham solutions as function of temperature**

| | **A1** | **A10** | **A12** | **A13** | **A14** | **A15** |
|---|---|---|---|---|---|---|
| CIPC | 55 | 55 | 55 | 54 | 54 | 54 |
| Propylene carbonate | 45 | | | | | |
| Dimethyldecanamide | | 45 | | | | |
| Ethylene glycol diacetate | | | 45 | | | |
| Dimethyl 2-methylpentanedioate | | | | 46 | | |
| Pentanoic acid, 5-(dimethylamino)-2-methyl-5-oxo-methyl ester | | | | | 46 | |
| Diisobutyl Ester of short chain diacids | | | | | | 46 |
| **SUM (% w/w)** | **100** | **100** | **100** | **100** | **100** | **100** |
| Viscosity 0 °C (cPs) | 1210 | 242 | 29 | 17 | 251 | 62 |
| Viscosity -5 °C (cPs) | 2567 | 421 | 42 | 27 | 873 | 101 |
| Viscosity -10 °C (cPs) | 5483 | 790 | 64 | 43 | 1885 | 168 |
| Nd (g/ml) | 1.075 | 1.05 | 1.12 | 1.23 | 1.12 | 1.08 |

**Table 3: Crystallisation and storage data of various chlorproham solutions (600 g/l) as functions of temperature and time**

| | **B10** | **B13** | **B15** |
|---|---|---|---|
| CIPC | 55.8 | 48.7 | 59.5 |
| Dimethyldecanamide | 44.2 | | |
| Dimethyl 2-methylpentanedioate | | 51.3 | |
| Diisobutyl Ester of short chain diacids | | | 40.5 |
| **SUM (% w/w)** | **100** | **100** | **100** |
| 4 weeks -10 °C | g | cfd | cfd |
| 4 weeks -10 °C to +10 °C | cfd | cfd | cfd |
| 4 weeks -10 °C to +50 °C | cfd | cfd | cfd |
| 1 week 0 °C | cfd | cfd | cfd |
| 8 weeks 40 °C | cfd | cfd | cfd |
| 2 weeks 54 °C | cfd | cfd | cfd |

| | | | |
|---|---|---|---|
| cfd: clear and fully dissolved; g: crystal growth; | | | |

## Claims

1. A solution comprising chlorpropham and at least one solvent selected from the list consisting of dimethyl-2-methylpentanedioate; ethylene glycol diacetate; methyl-5-(dimethylamino)-2-methyl-5-oxopentanoate; N,N-dimethyldecanamide and di*i*sobutylesters of α,ω-C₄₋₆ dicarboxylic acids.

2. The solution of claim 1, which comprises dimethyl-2-methylpentanedioate.

3. The solution of claim 1 or claim 2, which comprises a mixture of diisobutyl succinate, diisobutyl glutarate and diisobutyl adipate.

4. The solution of claim 3, wherein the diisobutyl succinate, diisobutyl glutarate and diisobutyl adipate are of relative weight ratios of 10-30: 50-70: 5-30 respectively, for example 15-25: 55-65: 10-25 respectively.

5. The solution of any one preceding claim, which comprises between about 450 and 700 g/L of chlorpropham, on the basis of the solution at 20 °C and atmospheric pressure.

6. The solution of claim 5, which comprises between about 550 and about 675 g/L of chlorpropham, on the basis of the solution at 20 °C and atmospheric pressure.

7. A method of forming a solution as defined in any one preceding claim, comprising contacting chlorpropham and the solvent.

8. A method comprising applying a solution as defined in any one of claims 1 to 6 or obtainable or obtained in accordance with claim 7, to a tuber.

9. The method of claim 8 wherein the tuber is a potato.

10. The method of claim 8 or claim 9 comprising fogging the solution to create a fog and applying the fog to the tuber.

11. The method of claim 10 wherein the fogging is hot fogging.

12. Use of a solution as defined in any one of claim 1 to 6 or obtainable or obtained in accordance with claim 7, in reducing sprouting in tubers.

13. A tuber comprising a solution as defined in any one of claim 1 to 6 or obtainable or obtained in accordance with claim 7, on at least a part of its surface.

14. The tuber of claim 13, which is a potato.

15. A kit of parts comprising, in two or more separate containers, chlorpropham and at least one solvent selected from the list consisting of dimethyl-2-methylpentanedioate; methyl-5-(dimethylamino)-2-methyl-5-oxopentanoate; N,N-dimethyldecanamide and di*i*sobutylesters of α,ω-C₄₋₆ dicarboxylic acids.
